# EUROPÄISCHE PATENTSCHRIFT

(11) **EP 2 128 539 B1**
(45) Veröffentlichungstag und Bekanntmachung des Hinweises auf die Patenterteilung: **02.01.2013**
(21) Anmeldenummer: 09006927.9
(22) Anmeldetag: 23.05.2009
(51) Int. Cl.: F24J 2/04

(54) **Einrichtung zur Aufnahme der Umgebungswärme durch das Dach eines Hauses**
Device for extracting ambient heat through the roof of a house
Dispositif de réception de la chaleur ambiante par le toit d'une maison

(30) Priorität: 31.05.2008 DE 102008026361
(43) Veröffentlichungstag der Anmeldung: 02.12.2009
(73) Patentinhaber: Dachziegelwerke Nelskamp GmbH, 46514 Schermbeck (DE)
(72) Erfinder: Indenklef, Jürgen, 46539 Dinslaken (DE); Kollenbach, Carsten, 46539 Dinslaken (DE)
(74) Vertreter: Hallermann, Dietrich-Otto

(56) Entgegenhaltungen:
- EP-A2- 0 110 836
- AT-B- 366 450
- DE-A1- 4 011 289
- DE-A1- 19 742 066
- DE-U1- 29 716 069
- US-A- 4 210 122
- US-A- 4 359 043

## Beschreibung

Die Erfindung betrifft eine Einrichtung zur Aufnahme der Umgebungswärme mittels insbesondere aus Ton oder Beton hergestellter Dachziegel zur Energienutzung, beispielsweise eines Hauses.

Neben verschiedenen Anderen erneuerbaren Energieformen ist es seit langern bekannt, zur Deckung des Energiebedarfs die Starahlungsenergie der Sonne zu nutzen. Bei dieser Technik wird die einfallende Strahlungsenergie der Sonne von Sonnenkollektoren absorbiert und in Wärme umgewandelt. Auf den entsprechend zur Sonne gerichteten Dachflächen werden über große Flächen plattenartig Kollektoren angebracht, denen eine technisch aufwendige Nutzungseinrichtung nachgeschaltet ist. Ein wesentlicher Nachteil einer solchen Technik ist darin zu sehen, dass die im wesentlichen eine Dachfläche nur teilweise bestückendtenden Sonnenkollektoren die Ästhetik eines Hauses oder dessen Gesamtanblick negativ beeinflussen.

Weiterhin ist es als nachteilig anzusehen, dass Wärme nur bei entsprechender Sonneneinstrahlung zu gewinnen ist. Darüber hinaus sind die auf den Dachziegeln montierten Sonnenkollektoren empfindlich gegenüber den in unseren Breitengraden auftretenden Umwalteinflüssen, wie Wind, Regen, Schnee und insbesondere HageL

Neben dieser Technik ist weiterhin das Potovoltaigverfahren bekannt, bei weichem zur Gewinnung von elektrischer Energie die direkte Untsetzung von Ucht mittels Halbleitermaterialien, so genannter Solarzellen, genutzt wird. Dieses Verfahren ist mit den gleichen oben aufgeführten Nachteilen behaftet. Hinzu kommt, dass beide Verfahren technisch sehr aufwendig sind und hohe Wartungs- und Reparaturkosten erfordern.

In der DE 28 20 536 A1 ist des weiteren ein als Solar-Kollektor-Dachziegel bezeichneter Dachziegel beschrieben, der aus Beton, Ton, Eternit oder Glas herstellbar ist und zum Durchfluss einer Wärmeträgerflüssigkeit innerhalb des Dachziegels ein Reservoir in Form eines Hohlraumes aufweist. Die die Sonnenstrahlen aufnehmende Oberfläche des Dachziegels besteht, nach Art von Waschbeton hergestellt, aus Glasbeton, d.h. zur Durchlässigkeit von Sonnenstrahlen sind im Beton Glaskügelchen integriert. Allein die Herstellung eines Dachziegels mit Hohlraum ist technisch aufwendig und das nachgeschaltete Auswaschen der Ausformung ist im Hinblick auf Vollständigkeit zur Vermeidung von Feinstkorn, das in die nachfolgenden Rohrleitungen und Pumpen gelangen kann, kaum vorstellbar. Der mit Glaskügelchen durchsetzte Beton erlaubt auch nur eine punktuelle Sonnenstrahlendutchlässigkeit. Im übrigen sind sämtliche zur Herstellung eines derartigen Dachziegels aufgeführten Materialien als Dämm- oder isoliermaterial zu bezeichnen, da sie alle nicht geeignet sind, Wärme aufzunehmen und weiter zu leiten.

Ein weiterer, so genannter Hohlziegel, der mit den oben genannten Nachteilen versehen ist, ist in der WO 01/36881 A1 beschrieben.

Darüber hinaus ist in der EP 0 110 836 A2 eine Solardachziegelkonstruktion beschrieben, bei weicher auf einem beispielsweise herkömmlichen Dachziegel, d.h. auf einen Teil, in einer länglichen, halbzylindrischen, mit Endwänden versehenen Abdeckung aus Glas oder einem anderen durchsichtigen Material angeordnet jeweils ein meanderartige Windungen aufweisendes Röhrchen aus einem wärmeleitfähigen Material vorgesehen ist. Die Abdeckungen sind jeweils mit Dichtelementen versehen und mittels zweier Bolzen am Dachziegel befestigt. Die Rohrenden der Windungen sind durch das Dach bzw. die Dachziegel geführt und unterhalb des Daches von Dachziegel zu Dachziegel über Kunststoffschläuche miteinander verbunden, um eine die erwärmte Flüssigkeit zu transportierende Leitung zu schaffen.

Eine weitere Einrichtung zur Aufnahme von Umgebungswärme mittels Dachziegel ist aus der Patentschrift AT-366 450 bekannt.

Demgegenüber liegt der Erfindung die Aufgabe zugrunde, eine Dachziegeleindeckung zu schaffen, die unabhängig von jeglicher Sonnenstrahlung durchführbar ist, die es ermöglicht, die Wärme aus der Umgebungstemperatur aufzunehmen, die widerstandsfähig gegen Umwelteinflüsse ist, die technisch einfach konstruiert und handhabbar ist und letztlich eine wirtschaftliche Lösung darstellt.

Diese Aufgabe wird gemäß der im Hauptanspruch aufgeführten Merkmale gelöst..

Der besondere Vorteil einer solchen Einrichtung liegt in der Aufnahme der Wärme aus der Umgebungstemperatur. Die Einrichtung ist unabhängig von der direkten Sonneneinstrahlung und ist somit in der Lage, auch noch bei Dunkelheit Wärme aufzunehmen und in den nachgeschalteten Kreislauf abzugeben.

Vorteilhafterweise sind die jedem Dachziegel zugeordneten Reservoire mit dem Dachziegel jeweils fest, beispielsweise durch Verkleben oder Verschrauben verbunden. Auf diese Weise ist ein nahezu sicherer Schutz gegen so genannte Umwelteinflüsse gegeben. Die auch als Kollektoren zu bezeichnenden Behälter weisen eine möglichst so geringe Dicke auf, dass durch eine entsprechend starke Verwirbelung der Flüssigkeit eine intensivere Wärmeaufnahme stattfindet.

Ein weiterer Vorteil der Einrichtung ist darin zu sehen, dass die Größe und Form des als Behälter ausgebildeten Kollektors jeder nahezu beliebigen Form eines Dachziegels mit Ausnahme des Krempers und der vorgegebenen Falzungen anpassbar zu gestalten ist. Dieser Vorteil der beliebigen Anpassung wird noch dadurch ergänzt, dass die sich bei der Befestigung eines Kollektors oder Behälters gegenüber am Dachziegel bildenden Fugen ausgefüllt werden und auf diese Weise die gesamte Oberfläche mit einer der Dachziegelfarbe angepassten, wärmeleitfähigen und witterungsbeständigen Beschichtung oder Farbe versehbar ist.

Um den Durchfluss der Flüssigkeit von der unteren zur oberen Sammelleitung oberhalb der Dachhaut zu gewährleisten, ist jeder Behälter im Fußbereich des Dackziegels mit einem den Dachziegel mittels einer Bohrung durchgreifenden Nippel nach unten und im Koptbereich mit einer mit einem Dichtelement versehenen Aufhahmeöffnung versehen, wobei im zusammengesetzten Zustand der Nippel mit der Aufnahmeöffnung korrespondiert.

Die durch die Kollektoren erwärmte Flüssigkeit wird in vorteilhafter Weise einer entsprechenden Nutzung zugeführt. Unter Einbeziehung einer als bekannt zu geltenden Wärmepumpe wird in einem ersten Kreislauf der Flüssigkeit die von den Kollektoren Wärme entzogen und die abgekühlte Flüssigkeit wird in einem primären Kreislauf wiederum über eine Sammelleitung den Kollektoren zugeführt In einem Sekundärkreislauf wird mittels einer Umwälzpumpe Flüssigkeit aus einem Speicher in den Kondensator der Wärmepumpe gefördert. Dabei wird die im Primärkreislauf entnommene Wärme über den Kondensator der Wärmepumpe Flüssigkeit zugeführt und die Flüssigkeit wieder zum Speicher gefördert. Dieser Kreislauf kenn solange wiederholt werden, bis die Temperatur der Flüssigkeit im Speicher so hoch ist, dass ein Verbraucher, beispielsweise in Form eines Heizkörpers nutzbringend bedient werden kann.

Eine weitaus günstigere Nutzung der durch die Behälter erzeugten Wärme ist dann möglich, wenn die durch die Kollektoren erzeugte Wärme so hoch ist, dass die Flüssigkeit über eine entsprechende Umwälzpumpe ohne Beaufschlagung der Wärmepumpe in den Speicher gepumpt und entsprechend genutzt werden kann.

In einer weiterhin volteilhaften Ausgestaltung der Erfindung ist es möglich, bei einer thermischen Überkapazität mit Hilfe eines Stromwandlers Strom zu gewinnen, der ins Netz eingsspeist und in einer Gegenrechnung zum Antrieb von elektrischen Verbrauchern genutzt werden kann.

Ein Ausführungsbeispiel der Erfindung ist in den Zeichnungen dargestellt und wird im nachfolgenden näher erläutert. Es zeigen:
- Figur 1: eine Draufsicht auf zwei einander überlappende Dachziegel,
- Figur 2: einen Schnitt durch einen Dachziegel, auf dem ein Kollektor angeordnet ist,
- Figur 3: einen teilweisen Schnitt durch eine Dachziegelreihe mit den entsprechen den Sammelleitungen,

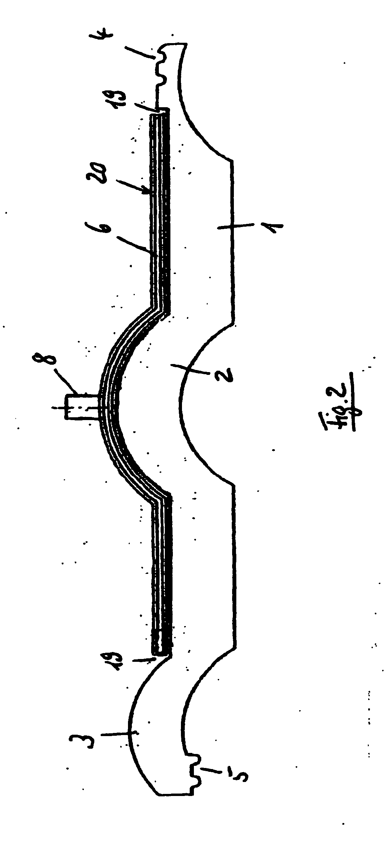

- Figur 2: einen Schnitt durch einen Dachziegel, auf dem ein Kollektor angeordnet ist,

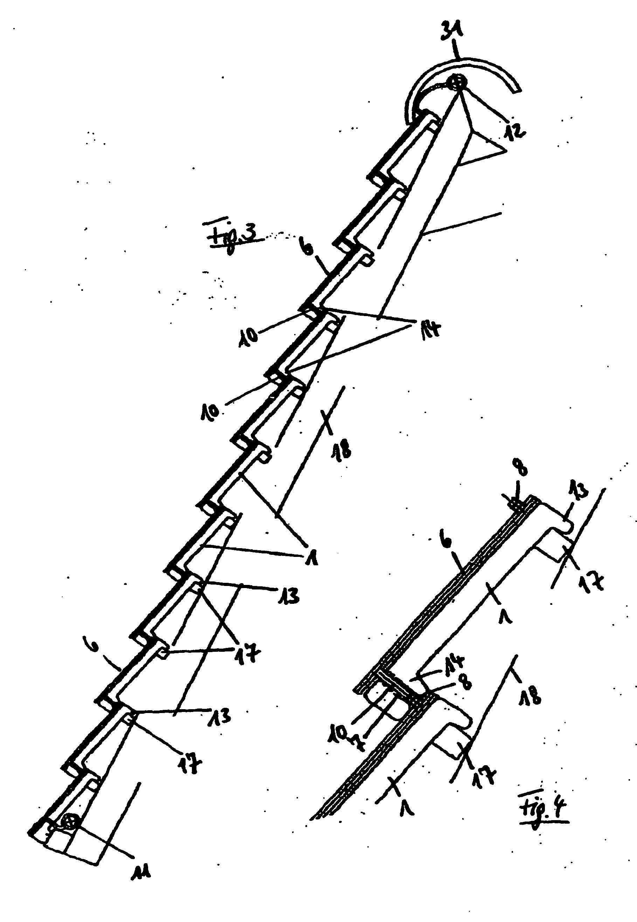

- Figur 3: einen teilweisen Schnitt durch eine Dachziegelreihe mit den entsprechen den Sammelleitungen,
- Figur 4: eine Detaildarstellung zweier überlappender Dachziegel mit Kollektoren im Schnitt und

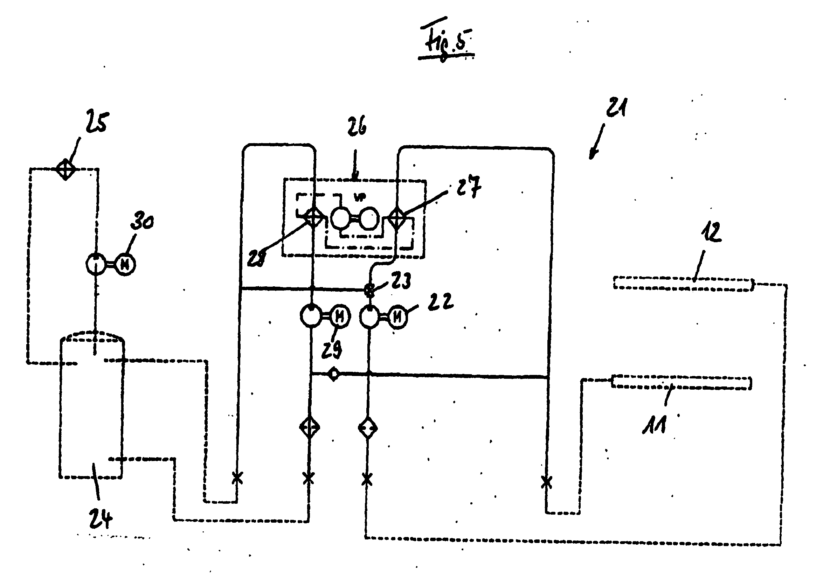

- Figur 5: ein Ausführungsbeispiel eines den Sammelleitungen nachgeschalteten Kreislaufs.

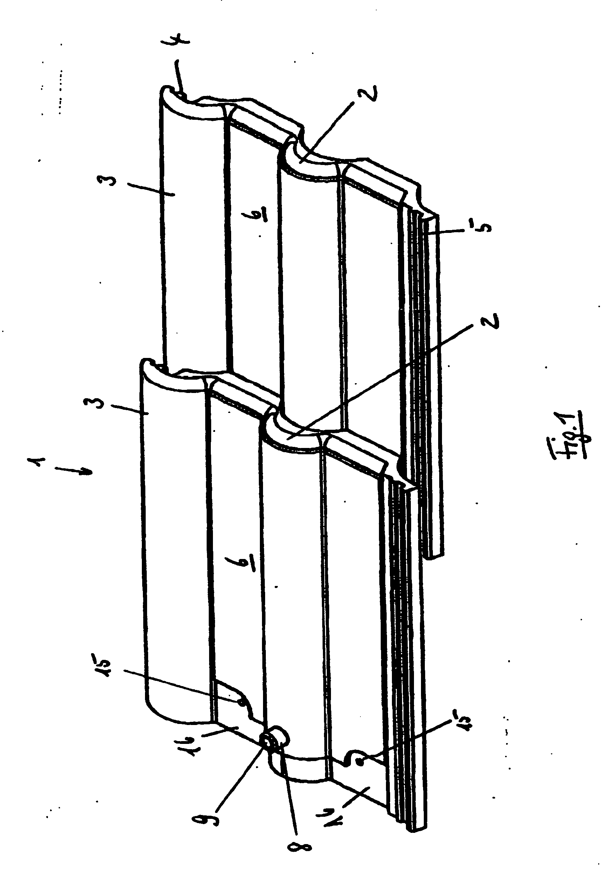

In Figur 1 ist in einer Draufsicht ein Ausführungsbeispiel zweier einander überlappender Dachziegel 1 in Verbindung mit auf deren Oberfläche befestigten, als Kollektoren ausgebildeten Behältern 6 dargestellt. Die Ausführung des Dachziegels 1 ist beliebig und dementsprechend der Behälter 6 in seiner Anpassung zu gestalten. Das in Figur 1 und auch im Schnitt in Figur 2 wiedergegebene Ausführungsbeispiel zeigt einen Dachziegel 1, der mittig eine Wulst 2 und seitlich einen Kremper 3 aufweist, wobei die Falzungen 5 unterhalb des Krempers 3 im seitlich über- und unterlappenden Verbund mit den Falzungen 4 korrespondieren. Die Behälter 6 sind als dünnwandige Behälter 6 aus einem möglichst wärmeleitfähigen und widerstandsfähigen Material, wie Kupfer, Aluminium oder auch aus Kunststoff ausgebildet. Die Behälter 6 sind, wie die Figuren 1 und 2 zeigen, der Oberfläche des Dachziegels angepasst und mit dem Dachziegel 1 durch beispielsweise Verkleben oder Verschrauben fest verbunden. Die sich zwischen Dachziegel 1 und Behälter 6 seitlich bildenden Fugen 19 werden derartig ausgefüllt, dass die nachfolgend aufzubringende Beschichtung oder Farbe 20 einen farblich einheitlichen Anblick des Dachziegels 1 bietet. Vergleichbar mit der wärmeleitfähigen Ausführung der Behälter 6, so sollte auch die Beschichtung oder Farbe wärmeleitfähig und insbesondere witterungsbeständig sein. Im oberen Bereich des Dachziegels 1 sind die Behälter 6 des dargestellten Ausführungsbeispiels mit Ausnehmungen 16 versehen. In dem durch die Ausnehmungen 16 freiliegenden Bereich der Dachziegel 1 sind Bohrungen 15 vorsehbar, über welche die Dachziegel 1 dann mittels befestigten Dachlatten 17 hintergreifende Rippe 13 und im Fußbereich nach dem dargestellten Ausführungsbeispiel eine Doppelrippe 14 auf, mit welcher sich der obere Dachziegel 1 auf den unteren Dachziegel 1 abstützt. Aus der detaillierten Wiedergabe nach Figur 5 geht die Ausbildung eines Behälters 6 mit Zufluss und Abfluss hervor. Im Fußbereich ist der Dachziegel 1 durchbohrt und ein mit auf dem Dachziegel 1 befestigten Behälter 6 verbundener Nippel 10 greift durch die Bohrung 7 in die Aufnahmeöffnung 8 des unteren Behälters 6 (Figur 4). Die Behälter 6 sind flüssigkeitsdurchflutet, wobei die Flüssigkeit beispielsweise Wasser, mit entsprechenden Zusätzen durch die untere Sammelleitung 11 jeder nach oben verlaufenden Dachziegelreihe zugeführt wird. Der aufwärts führende Flüssigkeitsstrom wird über die im Kopfbereich eines Dachziegels 1 angeordnete und mit einer Ringdichtung 9 versehene Öffnung 8 und einen in die Öffnung 8 eingreifenden Nippel 10 in den Behälter 6 des nachfolgenden überlappenden Dachziegels 1 gefördert. Dieser Vorgang wiederholt sich in jeder Dachziegelreihe, bis der Flüssigkeitsstrom die beispielsweise unter der Firstziegelreihe 31 untergebrachte Sammelleitung 12 erreicht und in den weiteren Kreislauf 21 eingespeist wird.

In Figur 5 ist in einem Ausführungsbeispiel ein Kreislauf 21 angedeutet, wie er zur Nutzung des über die auf den Dachziegeln 1 aufgebrachten Behälter 6 erzeugten und Wärme aufgenommenen Flüssigkeitsstromes gestaltet sein könnte. Im Idealfall würde der über die Sammelleitung 12 in den Kreislauf 21 abgegebene Flüssigkeitsstrom eine so hohe Temperatur aufweisen, dass der Flüssigkeitsstrom über eine Pumpe 22 und ein entsprechend geschaltetes Dreiwegeventil 23 direkt in den Speicher 24 gefördert und über eine weitere Pumpe 30 ein Verbraucher, beispielsweise in Form eines Heizkörpers 25, bedienbar wäre.

So wäre auch bei einer ständigen thermischen Überkapazität Stromgewinnung über einen nicht in der Zeichnung dargestellten Stromwandler möglich, wobei der Strom ins Stromnetz einspeisbar und in einer Gegenrechnung zum Antrieb von elektrischen Verbrauchern genutzt werden könnte.

Zur praktischen Nutzung der durch die Behälter 6 aus der Umgebungstemperatur gewonnenen Wärme wäre jedoch ein anderes Ausführungsbeispiel eines nachgeschalteten Kreislaufs 21 besser vorstellbar. In einem Primärkreislauf wird der Flüssigkeitsstrom von der Sammelleitung 12 über eine Pumpe 22 und der entsprechenden Schaltung eines Dreiwegeventils 23 dem Verdampfer 27 einer Wärmepumpe 26 zugeführt. Die Wärme wird entzogen und abgekühlte Flüssigkeit wird der Sammelleitung 11 wiederum zur Erwärmung zugeleitet. In einem so genannten Sekundärkreislauf wird mittels einer Pumpe die vom Verdampfer 27 gewonnene Wärme dem Kondensator 28 und über diesen wiederum dem Speicher 24 zugeführt. Dieser Kreislauf kann so häufig wiederholt werden, bis die Temperatur der Flüssigkeit im Speicher 24 so hoch ist, dass ein Verbraucher 25 effektiv gespeist werden kann. Der den Sammelleitungen 11, 12 nachfolgende Kreislauf 21 ist im Sinne einer effektiven Nutzung der durch die Kollektoren gewonnenen Wärme beliebig ausführbar.

### Bezugszeichenliste

- 1: Dachziegel
- 2: Wulst
- 3: Kremper
- 4: Falzungen
- 5: Falzungen
- 6: Behälter
- 7: Bohrung
- 8: Aufnahmeöffnung
- 9: Dichtungsring
- 10: Nippel
- 11: Sammelleitung
- 12: Sammelleitung
- 13: Rippe
- 14: Doppelrippe
- 15: Bohrungen
- 16: Ausnehmungen
- 17: Dachlatte
- 18: Dachsparren
- 19: Fugen
- 20: Beschichtung (Farbe)
- 21: Kreislauf
- 22: Pumpe
- 23: Dreiwegeventil
- 24: Speicher
- 25: Verbraucher
- 26: Wärmepumpe
- 27: Verdampfer
- 28: Kondensator
- 29: Pumpe
- 30: Pumpe (Verdampfer)
- 31: Firstziegelreihe
- 32: Pumpe (Verbraucher)

## Patentansprüche

1. Einrichtung zur Aufnahme der Umgebungswärme mittels insbesondere aus Ton oder Beton hergestellter Dachziegel zur weiteren Energienutzung, beispielsweise eines Hauses, wobei mindestens ein Teil der sich nach allen Seiten über- und unterlappenden Dachziegel (1) mit deren Oberflächen angepassten, flüssigkeitsdurchfluteten Kollektoren (6) versehen ist, die Kollektoren (6) jeder aufwärts verlaufenden Dachziegelreihe jeweils einen Zufluss vom unteren und einen Abfluss zum oberen Kollektor (6) aufweisen und jede aufwärts verlaufende, mit Kollektoren (6) bestückte Dachziegelreihe mit einer Flüssigkeit zuführenden und einer Flüssigkeit abführenden Sammelleitung (11, 12) verbunden ist, wobei beide Sammelleitungen (11, 12) in einen nachgeschalteten Flüssigkeitskreislauf (21) integriert sind, und jeder Kollektor (6) als flacher, dünnwandiger Behälter ausgebildet und aus einem wärmeleitenden Material wie beispielsweise Kupfer, Aluminium oder Kunststoff hergestellt ist, der Kollektor (6) in der Größe auf die sich nicht über- oder unterlappende Fläche eines Dachziegels abgestimmt und mit dem Dachziegel beispielsweise durch Verkleben oder Verschrauben fest verbunden ist und jeder Kollektor (6) im Fußbereich des Dachziegels (1) mit einem den Dachziegel (1) mittels einer Bohrung durchgreifenden Nippel (10) und im Kopfbereich mit einer mit einem Dichtelement (9) versehenen Aufnahmeöffnung (8) versehen ist, und im zusammengesetzten Zustand der Nippel (10) in die Aufnahmeöffnung (8) eingreift.

2. Einrichtung nach Anspruch 1, **dadurch gekennzeichnet, dass** die sich bei der Befestigung eines Kollektors (6) gegenüber dem Dachziegel (1) ergebenden seitlichen Fugen (19) verfüllt werden und die gesamte Oberfläche mit einer der Dachziegelfläche angepassten, wärmeleitfähigen und witterungsbeständigen Beschichtung oder Farbe (20) versehbar ist.

3. Einrichtung nach Anspruch 1, **dadurch gekennzeichnet, dass** der Kollektor (6) im unterlappenden Kopfbereich eines Dachziegels (1) mit seitlichen Ausnehmungen (16) versehbar ist und der Dachziegel (1) in den Ausnehmungen (16) jeweils eine Bohrung (15) aufweist

4. Einrichtung nach Anspruch 1, **dadurch gekennzeichnet, dass** der Kreislauf (21) aus der die erwärmte Flüssigkeit von den Kollektoren (6) mittels einer Pumpe (22) zu einem Speicher (24) fördernde Sammelleitung (12) und einer vom Speicher (24) in die zu den Kollektoren (6) zurückfordernde Sammelleitung (11) besteht, und dass an den Speicher (24) ein Verbraucher (25) anschließbar ist.

5. Einrichtung nach Anspruch 1, **dadurch gekennzeichnet, dass** der Kreislauf (21) aus einem Primär- und einem Sekundärkreislauf besteht, wobei zwischen den Kreisläufen eine Wärmepumpe (26) vorgesehen ist.

## Claims

1. System for the absorption of ambient heat, in particular by means of roof shingles made of clay or concrete, for further use of the energy, e.g., by a house, whereby at least some of the roof shingles (1) overlapping on top of and underneath one another have fluid-saturated collectors (6) adjusted to their surfaces, with the collectors (6) of each upward row of shingles each having an inlet from the lower collector and a drain to the higher collector (6), and each upward row of roof shingles equipped with collectors (6) is connected with a collecting main supplying fluid and a distributing main draining fluid (11, 12), whereby both mains (11, 12) are integrated into a downstream fluid circulation (21), and each collector (6) is formed as a shallow, thin-walled container and is made of a heat-conductive material such as copper, aluminium, or plastic, the size of the collector (6) is coordinated with the non-overlapping surface of a roof shingle and is affixed to the roof shingle, e.g., by adhesion or screws, and each collector (6) at the foot ofthe shingle (1) has a fitting (10) penetrating the shingle (1) by means of a drilled hole, and has an inlet (8) with a sealing element (9) at the head of the single, and the fitting (10) engages with the inlet (8) when the system is assembled.

2. System according to claim 1, **characterised in that** the joints (19) formed when a collector (6) is affixed opposite the shingle (1) are filled, and the entire surface can be provided with a heat-conductive, weatherproof coating or paint (20) adjusted to the surface of the roof shingles.

3. System according to claim 1, **characterised in that** the collector (6) at the head of a shingle (1) overlapped by another shingle can be provided with lateral recesses (16), and the shingle (1) has one drilled hole (15) in each recess (16).

4. System according to claim 1, **characterised in that** the circulation (21) consists of the distribution main (12) that transports the heated fluid using a pump (22) from the collectors (6) to a storage tank: (24) and a distributing main (11) that returns the fluid from the storage tank: (24) to the collectors (6), and that a load (25) can be connected to the storage tank: (24).

5. System according to claim 1, **characterised in that** the circulation (21) consists of a primary and a secondary circulation, with a heat pump (26) provided between the circulations.

## Revendications

1. Dispositif pour recueillir la chaleur ambiante au moyen de tuiles de toiture fabriquees notamment en argile ou en beton, afin d' ame Ldo r e r I' utilisation de I' energie d' une habitation par exemple, sachant qu' au moins une partie des tuiles (1), qui se chevauchent de tous cöt.e s , est pourvue de collecteurs (6) adaptes a la surface des tuiles et traverses par un flux de liquide, que les collecteurs (6) de chaque rangee de tuiles s'etendant vers le haut presentent chacun une arrivee de flux en provenance du collecteur (6) inferieur et un depart de flux vers le collecteur (6) superieur, et que chaque rangee de tuiles s'etendant vers le haut, equipee de collecteurs (6), est reliee aune conduite collectrice (11, 12) apportant le liquide et aune conduite collectrice (1I, 12) evacuant le liquide, sachant que les deux conduites collectrices (1I, 12) sont incorporees dans un circuit de liquide (21) relie en aval et que chaque collecteur (6) est realise sous la forme d' un recipient plat a paroi mince et est fabrique en un materiau thermoconducteur comme par exemple du cuivre, de l'aluminium ou du plastique, que la taille du collecteur (6) est adapte e a la surface d'une tuile qui ne se trouve pas en chevauchement et que le collecteur (6) est fixement assemble a la tuile, par exemple par collage ou vissage, et sachant que chaque collecteur (6) est pourvu, dans la region de pied de la tuile (1), d'un manchon de raccordement (10) traversant la tuile (1) au moyen d'un per9age, et, dans la region de tete, d'une ouverture receptrice (8) pourvue d'un e Lemerit; d'etancheite (9), et que le manchon de raccordement (10) s'engage dans l'ouverture receptrice (8) dans l'etat assemble.

2. Dispositif selon la revendication I, **caracterise en ce que** les joints lateraux (19) qui sont crees par rapport a la tuile (1) lors de la fixation d'un collecteur (6) sont remplis, et la total i te de la surface peut etre pourvue d' une peinture (20) ou d'un revetement adapte a la surface de la tuile, thermoconducteur et resistant aux intemperies.

3. Dispositif selon la revendication 1, **caracterise en ce que** le collecteur (6) peut etre pourvu d'evidements lateraux (16) dans la region de tete en chevauchement d'une tuile (1), et la tuile (1) presente un per9age respectif (15) dans les evidements (16).

4. Dispositif selon la revendication I, **caracterise en ce que** le circuit (21) est constitue de la conduite collectrice (12) vehiculant au moyen d'une pompe (22) vers un reservoir (24) le liquide rechauffe par les collecteurs (6), et d'une conduite collectrice (11) retournant du reservoir (24) vers les collecteurs (6), et **en ce qu'**un poste utilisateur (25) peut etre r-acco.rde au reservoir (24).

5. Dispositif selon la revendication I, **caracterise en ce que** le circuit (21) est constitue d' un circuit primaire et d'un circuit secondaire, une pompe achaleur (26) etant prevue entre les circuits.
